# FASCICULE DE BREVET EUROPEEN

(11) **EP 1 885 798 B1**
(45) Date de publication et mention de la délivrance du brevet: **17.07.2013**
(21) Numéro de dépôt: 06755514.4
(22) Date de dépôt: 19.05.2006
(51) Int. Cl.: C08K 5/548, C08K 3/36, C08L 21/00, C08F 290/00, C08F 290/14, C08L 51/08, C08L 51/10

(54) **UTILISATION D'UN AGENT DE COUPLAGE ORGANOSILICIQUE DANS LES COMPOSITIONS DE CAOUTCHOUC COMPRENANT UNE CHARGE INORGANIQUE**
VERWENDUNG EINES ORGANOSILICIUM-HAFTVERMITTLERS IN KAUTSCHUKZUSAMMENSETZUNGEN MIT EINEM ANORGANISCHEN FÜLLSTOFF
USE OF AN ORGANOSILICON COUPLING AGENT IN RUBBER COMPOSITIONS WITH AN INORGANIC FILLER

(30) Priorité: 26.05.2005 FR 0505288
(43) Date de publication de la demande: 13.02.2008
(73) Titulaire: RHODIA CHIMIE, 93300 Aubervilliers (FR)
(72) Inventeur: GUY, Laurent, F-69003 Lyon (FR); FERNANDEZ, Michel, F-69009 Lyon (FR); STERIN, Sébastien, F-69450 Saint Cyr Au Mont D'or (FR)
(74) Mandataire: Delenne, Marc
(86) Numéro de dépôt international: PCT/FR2006/001142
(87) Numéro de publication internationale: WO 2006/125896

(56) Documents cités:
- EP-A- 1 221 460
- WO-A-2004/056918
- FR-A- 2 857 972
- FR-A- 2 861 736
- US-A- 5 866 261
- US-A1- 2003 191 225
- US-A1- 2004 181 000
- US-A1- 2005 059 773
- US-B1- 6 271 331

## Description

Le domaine de la présente invention est celui de l'utilisation d'un composé organosilicique fonctionnalisé porteur d'au moins une fonction azo activée, comme agent de couplage (charge blanche - élastomère) dans les compositions de caoutchouc comprenant une charge inorganique à titre de charge renforçante. L'invention concerne également les compositions d'élastomère(s) obtenues grâce à l'emploi dudit agent de couplage, ainsi que les articles en élastomère(s) possédant un corps comprenant les compositions précitées.

Les types d'articles en élastomère(s) où l'invention est la plus utile sont ceux sujets notamment aux contraintes suivantes : des variations de températures et/ou des variations de sollicitation de fréquence importante en régime dynamique ; et/ou une contrainte statique importante ; et/ou une fatigue en flexion importante en régime dynamique. De tels types d'articles sont par exemple : des joints d'appareils électroménagers, des supports jouant le rôle d'extracteurs de vibrations de moteurs soit avec des armatures métalliques, soit avec un fluide hydraulique à l'intérieur de l'élastomère, des gaines de câbles, des semelles de chaussures et des galets pour téléphériques.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse plus basse synonyme notamment d'une diminution de l'échauffement interne des articles en élastomère(s) (tels que par exemple ceux précités) lors de leur utilisation, en service.

La mise en oeuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique - élastomère), on rappelle ici que doit être entendu, de manière connue, un agent apte à établir une connexion suffisante, de nature chimique et/ou physique, entre la charge inorganique et l'élastomère.

Un tel agent de couplage, au moins bifonctionnel, a comme formule générale simplifiée « Y-W-X », dans laquelle :
- Y représente un groupe fonctionnel (fonction "Y") capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère, par exemple par l'intermédiaire d'un atome ou d'un groupe d'atomes appropriés ;
- W représente un groupe divalent permettant de relier "Y" et "X".

Les agents de couplage ne doivent en particulier pas être confondus avec de simples agents de recouvrement de la charge inorganique qui, de manière connue, peuvent comporter la fonction "Y" active vis-à-vis de la charge inorganique mais sont en tout cas dépourvus de la fonction "X" active vis-à-vis de l'élastomère.

Des agents de couplage, notamment (silice - élastomère), ont été décrits dans un grand nombre de documents brevets, les plus connus étant des silanes sulfurés bifonctionnels, en particulier des alkoxysilanes sulfurés, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les compositions de caoutchouc comprenant une charge inorganique à titre de charge renforçante.

On cherche toujours aujourd'hui à améliorer les performances de ces agents de couplage pour une charge inorganique telle que par exemple la silice.

En particulier, le besoin est particulièrement présent dans le cas de matrices de caoutchouc à base d'un élastomère isoprénique dans lesquelles, de manière connue, une liaison efficace avec l'élastomère est beaucoup plus difficile à obtenir, comparativement à l'emploi de noir de carbone.

Poursuivant ses recherches, le Demandeur a découvert un nouvel agent de couplage pour charge inorganique qui permet d'améliorer de manière très sensible, en présence d'un élastomère isoprénique, les propriétés d'hystérèse des compositions de caoutchouc, ce qui se concrétisent pour les articles en élastomère(s) (tels que par exemple ceux précités) par une diminution de l'échauffement interne de ces articles lors de leur utilisation, en service ou par une augmentation du facteur de transmissibilité dans le cas des pièces antivibratoires dans les supports de moteurs.

### PREMIER OBJET DE L'INVENTION

Cet objectif, parmi d'autres, est atteint par la présente invention qui concerne, dans un premier objet, l'utilisation :
→ d'une quantité efficace d'un agent de couplage (A) (charge inorganique - élastomère) comprenant un composé organosilicique fonctionnalisé porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
   ◆ (B) au moins un élastomère de type caoutchouc, naturel ou synthétique ;
   ◆ (C) une charge inorganique à titre de charge renforçante ;
   ◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (ou des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification (D7), et des mélanges de ces espèces ;
→ ladite utilisation étant caractérisée en ce que :
   + l'agent de couplage (A) est choisi parmi le groupe des agents de couplage dont chaque membre est un composé constitué essentiellement d'un composé organosilicique fonctionnalisé consistant dans les espèces (i) et (2i) suivantes :
      (i) étant au moins un oligomère siloxane fonctionnalisé correspondant à la formule (I) suivante :

         [(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)

         dans laquelle :
         - a représente un nombre entier choisi parmi 0, 1 et 2 ;
         - a' représente un nombre entier choisi parmi 0, 1 et 2 ;
         - la somme a + a' se situe dans l'intervalle allant de 0 à 2 avec la condition selon laquelle quand a = 0, alors au moins un des symboles G⁰ répond à la définition donnée ci-après pour G² ;
         - soit au moins un des m, n, o, p est un nombre entier ou fractionnaire différent de 0 (zéro) et q représente un nombre entier ou fractionnaire égal ou supérieur à 1, soit q est supérieur à 1 et chacun des m, n, o, p a une valeur quelconque ;
         - les symboles G⁰, identiques ou différents, représentent chacun l'un des groupes correspondant à G² ou G¹ ;
         - les symboles G², identiques ou différents, représentent chacun : un groupe hydroxyle ou un groupe monovalent hydrolysable ;
         - les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ; avec la possibilité complémentaire selon laquelle, le cas échéant, un groupe G¹ peut former avec un groupe G² et l'atome de silicium auxquel G¹ et G² sont liés, un groupe carbocyclique monocyclique ou polycyclique ayant de 2 à 10 atomes de carbone cyclique et pouvant comporter un ou plusieurs hétéroatome(s) cyclique(s) oxygéné(s) ;
         - le symbole Z représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
         - le symbole A représente :
            + un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
            + un groupe -X-G³ où : X représente -O-, -S- ou -NG⁴- avec G⁴ prenant l'une quelconque des significations données ci-avant pour G¹ ; G³, identique ou différent de G⁴, représente l'un quelconques des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
            + ou, lorsque q = 1, un groupe -[-Z-SiO_{(3-a-a')/2}(G²)ₐ(G¹)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ dans lequel les symboles Z, G¹, G², G⁰, a, a', m, n, o et p possèdent les définitions indiquées ci-avant ;
      (2i) étant un mélange d'au moins un siloxane fonctionnalisé (i) avec (3i) au moins un organosilane fonctionnalisé correspondant à la formule (I) dans laquelle m = n = o = p = 0 (zéro), q = 1, a devient un nombre entier choisi parmi 0, 1, 2 et 3 et la somme a + a' = 3 ;
   + ledit agent de couplage (A) est incorporé dans des compositions de caoutchouc à base d'élastomères isopréniques.

S'agissant des oligomères siloxanes fonctionnalisés correspondant à la formule (I), ceux qui sont avantageusement visés dans la présente invention sont les espèces (i) répondant aux définitions données ci-avant, dans la formule (I) desquelles la somme m + n + o + p + q (correspondant au nombre d'atomes de silicium de l'oligomère) se situe dans l'intervalle allant de 2 à 20, de préférence de 2 à 12 et par exemple de 2 à 6.

Dans la formule (I) précitée, on doit bien comprendre que le groupement (Z-CON=N-CO-A) est relié à l'atome de Si du motif SiO_{(3-a-a')/2} par l'intermédiaire du radical divalent -Z-.

Dans la formule (I) précitée, la fonction "X" de l'agent de couplage est la fonction azo activée CO-N=N-CO, tandis que la fonction "Y" est une fonction hydroxyle/hydrolysable -Si-G⁰ et/ou -Si-G².

Dans ce qui précède, par groupe hydrocarboné aliphatique, on entend un groupe linéaire ou ramifié, de préférence comprenant de 1 à 25 atomes de carbone, éventuellement substitué.

Avantageusement, ledit groupe hydrocarboné aliphatique comprend de 1 à 18 atomes de carbone, mieux de 1 à 8 atomes de carbone et mieux encore de 1 à 6 atomes de carbone.

A titre de groupe hydrocarboné aliphatique saturé, on peut citer les groupes alkyle, tels que les radicaux méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle, hexadécyle.

Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C_{18'} de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C_{18'} mieux encore en C₅-C_{10'} On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturations éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C_{10'}

Des exemples de radicaux carbocycliques aromatiques sont les groupes (C₆-C₁₈)aryles, mieux encore (C₆-C₁₂)aryles et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel-que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont il est question supra à propos des symboles G², on entend des groupes tels que, par exemple : les atomes d'halogène, notamment le chlore ; les groupes -O-G⁵ et -O-CO-G⁵ où G⁵ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G⁵ pouvant être éventuellement halogéné et/ou substitué par un ou plusieurs alcoxy ; les groupes -O-N=CG⁶G⁷ dans lesquels G⁶ et G⁷ prennent indépendamment l'une quelconque des significations données ci-dessus pour G⁵, G⁶ et G⁷ pouvant être halogénés ou/et éventuellement substitués par un ou plusieurs alcoxy ; les groupes -O-NG⁶G⁷ dans lesquels G⁶ et G⁷ sont tels que définis ci-dessus.

Avantageusement, un tel groupe monovalent hydrolysable est un radical : alcoxy, linéaire ou ramifié, en C₁-C₈ éventuellement halogéné et/ou éventuellement substitué par un ou plusieurs (C₁,-C₈)alcoxy ; acyloxy en C₂-C₉ éventuellement halogéné ou éventuellement substitué par un ou plusieurs (C₁-C₈)alcoxy ; cycloalkyloxy en C₅-C₁₀ ; ou aryloxy en C₆-C_{18'} A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou (3-chloroéthoxy ou bien encore acétoxy.

Comme groupes carbocycliques monovalents que peuvent former ensemble, dans la formule (I), les substituants G¹ et G² et l'atome de silicium auquel ils sont liés, on citera par exemple les cycles :

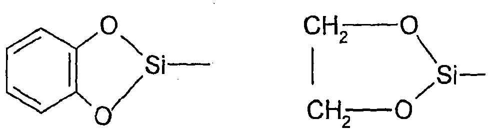

Comme cycles uniques que peuvent former ensemble les substituants G³ et G⁴ de l'atome d'azote présent dans le symbole A de la formule (I), on citera par exemple les cycles suivants où la valence libre est portée par un atome d'azote : le pyrrole, l'imidazole, le pyrazole, la pyrrolidine, la Δ2-pyrroline, l'imidazolidine, la Δ2-imidazoline, la pyrazolidine, la Δ3-pyrazoline, la pipéridine ; des exemples préférés sont : le pyrrole, l'imidazole et le pyrazole.

Parmi les composés organosiliciques fonctionnalisés (A), ceux qui conviennent bien (composés dits SA1) sont les composés :
➢ consistant dans :
   ■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
   ■ les symboles G², identiques ou différents, représentent chacun : un radical hydroxyle, un radical alkoxy, linéaire ou ramifié, en C₁-C₈, éventuellement substitué par un ou plusieurs (C₁-C₈)alkoxy ;
   ■ Z représente le radical divalent -Z'-Z"- où :
      - Z' représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
      - Z" représente : un lien valenciel, -O- ou -NR⁴-, avec R⁴ étant : un atome d'hydrogène ; un radical alkyle, linéaire ou ramifié, en C₁-C₈ ; un radical cycloalkyle en C₅-C₁₀ ; un radical aryle en C₆-C₁₈ ; ou un radical (C₆-C₁₈)aryl-(C₁-C₈)aikyle ;
   ■ A désigne un groupe -O-G³ ou -NG⁴G³ où G³ et G⁴, identiques ou différents entre eux, représentent chacun : un radical alkyle, linéaire ou ramifié, en C₁-C₈ ; un radical cycloalkyle en C₅-C₁₀ ou un radical aryle en C₆-C_{18'}
      Parmi les composés organosiliciques fonctionnalisés (A), ceux qui conviennent plus particulièrement bien ( composés dits SA2) sont les composés
➢ consistant dans :
   ■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, sont choisis dans le groupe formé par les radicaux méthyle, éthyle, propyle, isopropyle, cyclohexyle et phényle ;
   ■ les symboles G², identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
   ■ Z représente le radical divalent -Z'-Z"- où :
      - Z' représente : une chaîne alkylène en C₁-C₈ ;
      - Z" représente : un lien valenciel, -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
   ■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

Parmi les composés organosiliciques fonctionnalisés (A), ceux qui conviennent spécialement bien (composés dits SA3) sont les composés :
➢ consistant dans :
   ■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, sont choisis dans le groupe formé par les radicaux méthyle, éthyle, propyle, isopropyle, cyclohexyle et phényle ;
   ■ les symboles G², identiques ou différents, sont choisis dans le groupe formé par les radicaux hydroxyle, méthoxy, éthoxy, n-propoxy, isopropoxy et n-butoxy ;
   ■ Z représente le radical divalent -Z'- Z"- où :
      - Z' est choisi dans le groupe formé par les radicaux divalents méthylène, éthylène et propylène ;
      - Z" représente :un lien valenciel, -O- ou -NR⁴- avec R⁴ étant un atome d'hydrogène ;
   ■ A désigne un groupe -O-G³ où G³ est choisi dans le groupe formé par les radicaux méthyle, éthyle, propyle, isopropyle, cyclohexyle et phényle.

Comme exemples de composés organosiliciques fonctionnalisés (A) qui conviennent spécialement bien, on citera notamment les mélanges (2i) des espèces (i) suivantes :

[(CH₃)SiO_{1/2}] [(C₂H₅O)₂{(CH₂)₃-NH-CO-N=N-COOC₂H₅}SiO_{1/2}] (A-1)

[(CH₃)₃SiO_{1/2}]₂ [(C₂H₅O){(CH₂)₃-NH-CO-N=N-COOC₂H₅)SiO_{2/2}] (A-2)

avec l'espèce (3i) suivante :

(C₂H₅O)₃Si-(CH₂)₃-NH-CO-N=N-COOC₂H₅ (A-3)

Les composés organosiliciques fonctionnalisés (A) de types (i) et (2i) peuvent être préparés selon un procédé de synthèse consistant :
- à partir d'un réactif précurseur de formule (II) suivant :

   (G²)a(G¹)ₐSi-Z-CO-NH-NH-CO-A (II)
- à oxyder le groupe hydrazo du précurseur (II) à l'aide d'un système oxydant comprenant au moins un oxydant (par exemple un halogène comme le brome) et au moins une base (par exemple une base minérale comme Na₂CO₃),
- en faisant intervenir un réactif supplémentaire choisi parmi un mono- ou polyalkoxysilane (par exemple le triméthyléthoxysilane),
- et en opérant de préférence au sein d'un milieu liquide organique (par exemple en utilisant un solvant comme le dichlorométhane).

Un mode opératoire avantageux pour conduire ce procédé consiste :
- à charger dans le réacteur à température ambiante (par exemple 23°C) : le précurseur (II), la base (sa quantité dépendant de l'agent oxydant mis en oeuvre; par exemple, dans le cas du brome, on utilise deux équivalents molaires de base par rapport au brome), le solvant organique et le réactif supplémentaire (sa quantité correspondant par exemple à au moins un équivalent molaire par rapport au précurseur),
- puis à additionner progressivement dans le milieu réactionnel le système oxydant (sa quantité molaire étant par exemple stoechiométrique par rapport à celle du précurseur).

S'agissant du précurseur de formule (II), il peut être préparé selon un procédé de synthèse où l'on fait réagir un silane précurseur de formule :

(G²)ₐ(G¹)_{a'}Si-P¹

avec un dérivé hydrazo précurseur de formule :

P²-NH-NH-CO-A

formules dans lesquelles les symboles G¹, G² et A sont tels que définis ci-avant, a + a' = 3 et P¹ et P² représentent des groupes dont la structure et la fonctionnalité de chacun sont telles que ces groupes sont capables de réagir l'un avec l'autre pour donner naissance à l'enchaînement central -Z-CO- de manière à conduire au composé hydrazo de formule :

(G²)ₐ(G¹)_{a'}Si-Z-CO-NH-NH-CO-A (II)

Dans le cas par exemple de la préparation du précurseur de formule (II) dans la structure dusquel le symbole Z représente alors le radical divalent -(CH₂)₃-NH-, le schéma de synthèse qui est appliqué consiste à faire réagir un silane précurseur de formule :

(G²)ₐ(G¹)_{a'}Si-(CH₂)₃-NCO

avec un dérivé hydrazo précurseur de formule :

H₂N-NH-CO-A

pour obtenir le composé hydrazo de formule :

(G²)ₐ(G¹)_{a'}Si-(CH₂)₃-NH-CO-NH-NH-CO-A (II)

En ce qui concerne la manière pratique de mettre oeuvre le procédé qui vient d'être décrit pour le précurseur de formule (II), on se reportera pour plus de détails au contenu de FR-A-2340323.

L'homme du métier comprend que les agents de couplage (A) précédemment décrits pourraient être préalablement greffés sur les charges inorganiques renforçantes, notamment sur de la silice, par l'intermédiaire de leur(s) fonction(s) "Y", les charges inorganiques renforçantes ainsi précouplées pouvant ensuite être liées à l'élastomère par l'intermédiaire de leur(s) fonction(s) libre(s) "X". Les agents de couplage (A) pourraient être encore préalablement greffés sur l'élastomère isoprénique par l'intermédiaire de leur(s) fonction(s) "X", l'élastomère ainsi fonctionnalisé pouvant ensuite être liées à la charge inorganique par l'intermédiaire de leur(s) fonction(s) libre(s) "Y". On préfère toutefois, notamment pour des raisons de meilleure mise en oeuvre des compositions de caoutchouc à l'état cru, utiliser tout ou partie des agents de couplage soit greffé sur la charge, soit à l'état libre (c'est à dire non greffé).

### DEUXIEME OBJET DE L'INVENTION

Un deuxième objet de la présente invention concerne les compositions comprenant :
(B) au moins un élastomère isoprénique,
(C) une charge inorganique renforçante, et
(A) une quantité adéquate de l'agent de couplage consistant dans l'ingrédient (A) décrit ci-avant.

Plus précisément, ces compositions comprennent (les parties étant données en poids) :
- pour 100 parties d'élastomère(s) isopréniques(s),
- de 10 à 200 parties de charge inorganique (C), de préférence de 30 à 150 parties et plus préférentiellement de 40 à 120 parties,
- une quantité de système de couplage qui apporte dans chaque composition 0,5 à 15 parties, de préférence 1 à 10 parties et plus préférentiellement 2 à 7 parties, d'ingrédient (A).

De manière avantageuse, la quantité d'ingrédient (A), choisie dans les zones générale et préférentielles précitées, est déterminée de manière à ce qu'elle représente de 1 à 20%, de préférence de 2 à 15%, plus préférentiellement de 3 à 10%, par rapport a poids de la charge inorganique renforçante.

Nous allons revenir dans ce qui suit sur les définitions du composé (B) consistant dans au moins un élastomère isoprénique, et du composé (C) consistant dans une charge inorganique renforçante.

Par élastomères isopréniques qui sont mis en oeuvre pour les compositions conformes au deuxième objet de l'invention, on entend plus précisément :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   - (2.1) les monomères diènes conjuguées, autres que l'isoprène, ayant de 4 à 22 atomes de carbone, comme par exemple :le butadiène-1,3, le diméthyl-2,3 butadiène-1,3, le chloro-2 butadiène-1,3 (ou chloroprène), le phényl-1 butadiène-1,3, le pentadiène-1,3, l'hexadiène-2,4 ;
   - (2.2) les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
   - (2.3) les monomères nitriles vinyliques ayant de 3 à 12 atomes de carbone, comme par exemple l'acrylonitrile, le méthacrylonitrile ;
   - (2.4) les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   - (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire (allant de 51 % à 99,5 % et, de préférence, de 70 % à 99 % en poids) d'élastomère précité (1) ou (3) et une quantité minoritaire (allant de 49 % à 0,5 % et, de préférence, de 30 % à 1 % en poids) d'un ou plusieurs élastomères diéniques autres qu'isopréniques.

Par élastomère diénique autre qu'isoprénique, on entend de manière connue en soi : les homopolymères obtenus par polymérisation d'un des monomères diènes conjugués définis ci-avant au point (2.1), comme par exemple le polybutadiène et le polychloroprène ; les copolymères obtenus par copolymérisation d'au moins deux des diènes conjugués précités (2.1) entre eux ou par copolymérisation d'un ou plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile) ; les copolymères ternaires obtenus par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène 1,4, l'héthylidène-norbornène, le dicyclopentadiène (élastomère EPDM).

A titre préférentiel, on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutchouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile) et un terpolymère (éthylène-propylène-diène monomère non conjugué).

A titre plus préférentiel, on fait appel à un ou plusieurs élastomères isopréniques choisis parmi : (1) les polyisoprènes de synthèse homopolymères ; (3) le caoutchouc naturel ; (5) un mélange des élastomères précités (1) et (3) ; (6) un mélange contenant une quantité majoritaire d'élastomère précité (1) ou (3) et une quantité minoritaire d'élastomère diénique autre qu'isoprénique consistant dans le polybutadiène et le poly(butadiène-styrène).

Dans le présent exposé, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone. L'expression "charge inorganique renforçante" englobe encore dans sa définition des charges mixtes à base de charge "blanche" et de noir de carbone. Cette charge inorganique doit être capable de renforcer à elle seule, sans autre moyen qu'un agent de couplage intermédiaire, une composition de caoutchouc technique, en d'autres termes capable de remplacer, dans sa fonction de renforcement, une charge conventionnelle à base seulement de noir de carbone.

L'état physique sous lequel se présente la charge inorganique renforçante est indifférent, c'est-à-dire que ladite charge peut se présenter sous forme de poudre, de granulés ou de billes (microperles).

De manière préférentielle, la charge inorganique renforçante ou composé (C) consiste dans de la silice, de l'alumine, du noir de carbone recouvert totalement ou partiellement par de la silice et/ou de l'alumine ou un mélange de ces espèces.

De manière plus préférentielle, la charge inorganique renforçante consiste dans de la silice, prise seule ou en mélange avec de l'alumine.

A titre de silice susceptible d'être mise en oeuvre dans l'invention conviennent toutes les silices précipitées ou les silices pyrogénées (silices de combustion) connues de l'homme de l'art présentant, de préférence, une surface spécifique BET inférieure ou égale à 450 m²/g. On préfère les silices précipitées, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Parmi les silices précipitées hautement dispersibles on peut utiliser par exemple celles ayant une surface spécifique CTAB égale ou inférieure à 450 m²/g, de préférence comprise entre 30 et 400 m²/g, et en particulier celles décrites dans le brevet US-A-5403570 et les demandes WO-A-95/09127 et WO-A-95/09128 dont le contenu est incorporé ici. Comme exemples non limitatifs de telles silices précipitées très dispersibles préférentielles, on peut citer les silices Zeosil 1165 MP et 1115 MP de la société RHODIA, les silices BV3380 et Ultrasil 7000 de la société DEGUSSA, la silice Perkasil KS 430 de la société AKZO, les silices Hi-Sil 2000 et Hi-Sil EZ 150G de la société PPG, les silices Zeopol 8715, 8741, 8745 ou 8755 de la société HUBER. Conviennent aussi les silices précipitées traitées telles que par exemple les silices "dopées" à l'aluminium décrites dans la demande EP-A-0735088 dont le contenu est également incorporé ici.

A titre plus préférentiel, conviennent bien les silices de précipitation ayant :
- une surface spécifique CTAB de 60 à 250 m²/g, de préférence de 80 à 230 m²/g,
- une surface spécifique BET de 60 à 260 m²/g, de préférence de 80 à 240 m²/g,
- un rapport surface spécifique BET / surface spécifique CTAB de 1,0 à 1,6.

Bien entendu, par silice, on entend également des coupages de différentes silices. La surface spécifique CTAB est déterminée selon la méthode NFT 45007 de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NF ISO 9277 de décembre 1996.

A titre d'alumine renforçante, on utilise avantageusement une alumine hautement dispersible ayant :
- une surface spécifique BET de 30 à 400 m²/g, de préférence de 60 à 250 m²/g,
- une taille moyenne de particules d'au plus 500 nm, de préférence d'au plus 200 nm, et
- un taux élevé de fonctions réactives de surface AI-OH, par exemple telle que décrite dans le document EP-A-0810258.

Comme exemples non limitatifs de pareilles alumines renforçantes, on citera notamment les alumines A125, CR125, D65CR de la société BAÏKOWSKI.

A titre de noirs de carbone recouverts totalement ou partiellement par une charge "blanche", on citera notamment les produits de la gamme ECOBLACK de la société CABOT, et en particulier le produit référencé CRX 2000.

A titre d'autres exemples de charge inorganique susceptible d'être utilisée dans les compositions de caoutchouc de l'invention peuvent être encore cités des (oxyde-) hydroxydes d'aluminium, des aluminosilicates, des oxydes de titane, des carbures ou nitrures de silicium, tous du type renforçants tels que décrits par exemple dans les demandes WO-A-99/28376, WO-A-00/73372, WO-A-02/053634, WO-A-2004/003067, WO-A-2004/056915.

Les compositions conformes à l'invention contiennent en outre un ingrédient (D) comprenant tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
■ s'agissant du système de vulcanisation, on peut citer par exemple :
   - (D1) : à titre obligatoire, des agents de vulcanisation choisis parmi le soufre ou des composés donneurs de soufre, comme par exemple des dérivés de thiurame ; s'agissant par exemple de soufre, il est utilisé de manière connue à un taux allant de 0,5 à 10 et de préférence de 0,5 à 5 parties en poids pour 100 parties en poids d'élastomère(s) isoprénique(s) ;
   - (D2) : à titre facultatif, des accélérateurs de vulcanisation, comme par exemple des dérivés de guanidine et des dérivés de sulfénamide ; pareil activateur, quand on en utilise un, est utilisé de manière connue à un taux allant de 0,5 à 10 et de préférence de 0,5 à 5 parties en poids pour 100 parties en poids d'élastomère(s) ;
   - (D3) : à titre facultatif, des activateurs de vulcanisation, comme par exemple l'oxyde de zinc, l'acide stéarique et le stéarate de zinc ;
■ s'agissant d'autre(s) additif(s), on peut citer par exemple :
   - (D4) : à titre facultatif, une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs de carbone, on peut citer les noirs de carbone N115, N134, N234, N339, N347, N375 ; la quantité de noir de carbone est déterminée de manière à ce que d'une part la charge inorganique renforçante mise en oeuvre représente plus de 50 % du poids de l'ensemble charge inorganique + noir de carbone, et d'autre part la quantité de charge renforçante totale (charge inorganique + noir de carbone) reste dans les intervalles de valeurs indiqués supra, pour la charge inorganique renforçante, à propos de la constitution pondérale des compositions ;
   - (D5) : à titre facultatif, une charge blanche conventionnelle peu ou non renforçante comme par exemple des argiles, la bentonite, le talc, la craie, le kaolin, le dioxyde de titane ou un mélange de ces espèces ;
   - (D6) : à titre facultatif, des agents protecteurs, comme par exemple des agents antioxydants et/ou des agents antiozonants, comme par exemple la N-phényl-N'-(diméthyl-1,3 butyl)-p-phénylène-diamine ;
   - (D7) : à titre facultatif, des agents de plastification.

### TROISIEME OBJET DE L'INVENTION

Un troisième objet de la présente invention concerne le procédé de préparation des compositions d'élastomère(s) comprenant une charge inorganique renforçante et une quantité efficace du système de couplage. Ce procédé peut se faire selon un mode opératoire classique en deux phases 1 et 2 dans lesquelles :
- phase 1 (dite étape non-productive "à chaud") : on introduit et malaxe dans un mélangeur interne usuel, en une ou deux étapes ou plus de deux étapes, tous les ingrédients nécessaires, à l'exception en général du (ou des) agent(s) de vulcanisation (D1) ; à titre illustratif, on peut ainsi introduire et malaxer tous les ingrédients ci-après définis : élastomère(s) (B), charge inorganique (C), tout ou une partie de l'agent de couplage (A), éventuellement un (ou des) accélérateur(s) de vulcanisation (D2), éventuellement un (ou des) activateur(s) de vulcanisation (D3), éventuellement un (ou des) agent(s) protecteur(s) (D6), éventuellement une (ou des) charge(s) renforçante(s) non-blanche(s) (D4), éventuellement une (ou des) charge(s) blanche(s) peu ou non renforçante(s) (D5), éventuellement un (ou des) agent(s) de plastification (D7) ; on opère à une température comprise entre 40 et 200°C, de préférence entre 60 et 180°C ; une ou plusieurs étape(s) ultérieure(s) de travail thermomécanique peut (peuvent) être réalisée(s) dans le mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion dans la matrice élastomérique de la charge inorganique renforçante et des agents de couplage ; au cours de pareille(s) étape(s) ultérieure(s), il est possible d'introduire l'un et/ou l'autre des ingrédients nécessaires évoqués ci-avant ;
- phase 2 (dite phase productive "à froid") : puis le mélange ainsi obtenu est repris sur un mélangeur externe et on y ajoute alors le (ou les) agent(s) de vulcanisation et éventuellement un ou plusieurs autre(s) ingrédient(s) ; à titre illustratif, on ajoute ainsi les ingrédients suivants : éventuellement le reste d'agent de couplage (A), un (ou des) agent(s) de vulcanisation (D1), éventuellement un (ou des) accélérateur(s) de vulcanisation (D2), éventuellement un (ou des) activateur(s) de vulcanisation (D3), éventuellement un (ou des) agent(s) protecteur(s) (D6) ; on opère à une température plus basse, inférieure à 120°C, et de préférence de 25 à 100°C.

De manière préférentielle, le procédé de préparation des compositions d'élastomère(s) se fait selon le mode opératoire classique en deux phases 1 et 2 dans lequel l'agent de couplage (A) est fractionné entre les deux phases 1 et 2, la première fraction incorporée en phase 1 correspondant à une proportion de 10 à 80% en poids, la seconde fraction incorporée en phase 2 correspondant à une proportion de 90 à 20% en poids.

Il convient de noter qu'il est possible d'introduire tout ou partie des agents de couplage (A) sous forme supportée (la mise sur support étant réalisée au préalable) sur un solide compatible avec les structures chimiques correspondant à ces agents de couplage ; un tel support consiste notamment dans le noir de carbone. Par exemple, lors du fractionnement des agents de couplage (A) sur les deux phases 1 et 2, il peut être avantageux d'introduire l'agent de couplage sur le mélangeur externe de la phase 2 après une mise sur support dudit agent de couplage afin de faciliter son incorporation et sa dispersion.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130 à 200°C, pendant un temps suffisant qui peut varier par exemple entre 5 et 90 minutes en fonction notamment de la température de cuisson, du système de vulcanisation adopté et de la cinétique de vulcanisation de la composition considérée.

II va de soi que la présente invention, prise dans son deuxième objet, concerne les compositions d'élastomère(s) précédemment décrites tant à l'état cru (c'est-à-dire avant cuisson) qu'à l'état cuit (c'est-à-dire après réticulation ou vulcanisation).

### QUATRIEME OBJET DE L'INVENTION

Un quatrième objet de la présente invention concerne les articles en élastomère(s) isoprénique(s) possédant un corps comprenant les compositions décrites ci-avant dans le cadre du deuxième objet de l'invention. La présente invention est particulièrement utile pour préparer des articles consistant par exemple dans des supports de moteurs, des semelles de chaussures, des galets de téléphériques, des joints d'appareillages électroménagers et des gaines de câbles.

Les exemples suivants illustrent la présente invention.

### EXEMPLE 1

Cet exemple illustre la préparation d'un agent de couplage (A) de type (2i),

Dans un réacteur de 250 mL sont introduits 10 g (28,4 mmol, 1 éq) du composé 1 suivant : 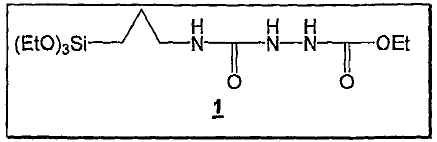 (Et = radical monovalent Ethyle)
ainsi que 7,53 g (71 mmol, 2.5 éq) de Na₂CO₃ sec et 50 mL d'un mélange 50/50 (vol/vol) de triméthyléthoxysilane et de dichlorométhane. Une solution de 4,55 g de brome (28,4 mmol, 1 éq) dans 15 mL de dichlorométhane est ajoutée goutte à goutte en 1 heure. Le mélange réactionnel est agité 30 minutes supplémentaires après la fin de l'addition du brome.

Le mélange réactionnel est ensuite filtré puis concentré sous vide. 9,77 g d'un liquide orange vif fluide sont obtenus.

L'analyse par RMN ¹H montre que le composé **1** a été entièrement consommé, que la groupement azo a été formée sélectivement et que la perte en SiOEt est limitée.

La composition molaire du produit final est indiquée dans le tableau 1.

Le produit final obtenu est un mélange de l'espèce silane de formule :

(C₂H₅O)₃Si-(CH₂)₃-NH-CO-N=N-COOC₂H₃ (A-3) :

avec les espèces siloxanes de formules :

[(CH₃)₃SiO_{½}] [(C₂H₅O)₂ {(CH₂)₃-NH-CO-N=N-COOC₂H₅} SiO_{½}] et (A-1) :

[(CH₃)₃SiO_{1/2}]₂ [(C₂H₅O){(CH₂)₃-NH-CO-N=N-COOC₂H₅}SiO_{2/2}] (A-2) :

dont les proportions molaires sont indiquées dans le tableau 1 suivant.

**Tableau 1**

| | Espèce (A-3) | Espèce (A-1) | Espèce (A-2) | Perte en fonctions SiOEt |
|---|---|---|---|---|
| Exemple 1 | 81% | 12% | 7% | 8,7% |

### EXEMPLE 2

Cet exemple a pour but de démontrer les performances de couplage (charge blanche-élastomère) de l'agent de couplage (A) de type (2i) tel que préparé dans l'exemple 1 donné ci-avant.

Ces performances sont comparées : d'une part à celle d'une composition de caoutchouc témoin renforcée avec une charge siliceuse et ne renfermant pas d'agent de couplage ; et d'autre part à celle d'une autre composition témoin renforcée avec une charge siliceuse et renfermant un agent de couplage conventionnel à base du silane TESPT:

(C₂H₅O)₃Si-(CH₂)₃-S₄-(CH₂)₃-Si(OC₂H₅)₃

On compare 3 compositions d'élastomères représentatives de formulation de semelles de chaussure. Ces 3 compositions sont identiques aux différences près qui suivent :
- composition n° 1 (témoin 1) : renforcée avec de la silice et ne comprenant pas d'agent de couplage ;
- composition n° 2 (témoin 2) : renforcée avec de la silice et comprenant un agent de couplage qui est introduit en totalité au mélangeur interne et apporte à la composition 4 pce de silane TESPT ;
- composition n° 3 (exemple 2) : renforcée avec de la silice et comprenant un agent de couplage, fractionné entre mélangeur interne (1,5 pce) et mélangeur externe (3,8 pce), apportant dans la composition 5,3 pce de l'agent de couplage (A) de type (2i) tel que préparé dans l'exemple 1 donné ci-avant.

### 1) Constitution des compositions d'élastomères :

Dans un mélangeur interne de type BRABENDER sont préparées les compositions dont la constitution, exprimée en partie en poids pour 100 parties d'élastomères (pce), est indiquée dans le tableau 2 donné ci-après :

**Tableau 2**

| Composition | Témoin 1 | Témoin 2 | Exemple 2 |
|---|---|---|---|
| NR (1) | 80 | 80 | 80 |
| BR (2) | 20 | 20 | 20 |
| Silice (3) | 50 | 50 | 50 |
| Agent de couplage 1 (4) | - | **4,0** | - |
| Agent de couplage 2 (5) | - | - | **1,5** |
| ZnO - 80% | 3,75 | 3,75 | 3,75 |
| Acide stéarique | 2,5 | 2,5 | 2,5 |
| Antioxydant (6) | 1,9 | 1,9 | 1,9 |
| Agent de couplage 2 (5) | - | - | **3,8** |
| CBS - 80% (7) | 1,88 | 1,88 | 1,88 |
| TBzTD (8) | 0,2 | 0,2 | 0,2 |
| Soufre - 80% | 1,88 | 1,88 | 1,88 |
| Noir de carbone (N330) | 4,0 | 4,0 | 4,0 |

Légende:
(1) Caoutchouc naturel SMR - CV60 (fourni par la société Safic-Alcan).
(2) Polybutadiène ou BR (Buna CB24 de la société Bayer) avec 96% min de cis 1-4 et préparé par catalyse au Néodyme.
(3) Silice (Z1165 MP de la société Rhodia) avec surfaces BET et CTAB voisines de 150-160 m²/g_{.}
(4) TESPT (Silquest A1289 de la société GE-Osi).
(5) Agent de couplage (A) de type (2i) tel que préparé dans l'exemple 1 donné ci-avant.
(6) N-1,3-diméthylbutyl-N-phényl-para-phénylènediamine (Santoflex 6-PPD de la société Flexsys).
(7) N-cyclohexyl-2-benzothiazyl-sulfénamide (Rhénogran CBS-80 de la société Bayer).
(8) Disulfure de tétrabenzylthiurame (Perkacit TBzTD de la société Flexsys).

Les agents de couplage sont utilisés à un taux isomolaire en silicium, c'est-à-dire que l'on utilise quelle que soit la composition, le même nombre de moles de fonctions "Y" ici ["Y" = Si(OC₂H₅)] réactives vis-à-vis de la silice et de ses groupes hydroxyles de surface.

### 2) Préparation des compositions d'élastomères :

Le procédé de préparation des compositions d'élastomères est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque BRABENDER (capacité de 70 ml). Le coefficient de remplissage est de 0,75. La température initiale et la vitesse des rotors sont fixées à chaque fois de manière à atteindre des températures de tombée de mélange voisines de 140-160°C.

Elle permet d'incorporer les élastomères, puis la charge renforçante (introduction fractionnée), avec tout ou partie de l'agent de couplage, puis les divers activateurs de vulcanisation (acide stéarique, oxyde de zinc) et l'agent protecteur (6-PPD). Pour cette phase, la durée est comprise entre 5 et 10 minutes.

Après refroidissement du mélange (température inférieure à 100°C), la seconde phase permet l'introduction du système de vulcanisation (soufre et accélérateurs) et éventuellement le reste de l'agent de couplage et une charge renforçante conventionnelle (noir de carbone). Elle est réalisée sur un mélangeur à cylindres, préchauffé à 50°C. La durée de cette phase est comprise entre 2 et 6 minutes.

Il faut noter que lors du fractionnement entre les deux mélangeurs de la quantité d'agent de couplage , l'introduction dudit agent de couplage sur la mélangeur à cylindres est réalisé de préférence après une mise sur support (au préalable) avec le noir de carbone.

La composition finale est ensuite calandrée sous la forme de plaques d'épaisseur 2-3 mm.

Sur ces mélanges dits crus, une évaluation de leurs propriétés rhéologiques permet d'optimiser la durée et la température de vulcanisation.

Ensuite, les propriétés mécaniques et dynamiques des mélanges vulcanisés à l'optimum sont mesurées.

### 3) Rhéométrie des compositions :

Les mesures sont réalisées sur les compositions à l'état cru. On a porté dans le tableau II les résultats concernant le test de rhéologie qui est conduit à 150°C au moyen d'un rhéomètre ODR MONSANTO 100 S selon la norme DIN 53529.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :
- le couple minimum (Cm) qui reflète la viscosité de la composition à la température considérée ;
- le couple maximum (CM) ;
- le delta-couple (ΔC = CM - Cm) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au dessus du couple minimum à la température considérée (150°C) et qui reflète le temps pendant lequel il est possible de mettre en oeuvre les mélanges crus à cette température sans avoir d'initiation de la vulcanisation.

Les résultats obtenus sont indiqués dans le tableau 3.

**Tableau 3**

| Référence | Témoin 1 | Témoin 2 | Exemple 2 |
|---|---|---|---|
| Cm (dN.m) | 27,2 | 17,33 | 22,06 |
| CM (dN.m) | 58,44 | 83,81 | 89,35 |
| Delta couple (dN.m) | 31,24 | 66,48 | 67,29 |
| TS 2 (min) | 7, 98 | 7,62 | 7,35 |
| T98 (min) | 16,47 | 15,41 | 12,11 |
| Vret max (dN.m/min) | 3,55 | 10,91 | 19,64 |

### 4) Propriétés mécaniques des vulcanisats :

Les mesures sont réalisées sur les compositions vulcanisées à l'optimum (T98) pour une température de 150°C.

Les essais de traction uniaxiale sont réalisés conformément aux indications de la norme NF T 46-002 avec des éprouvettes de type H2 à une vitesse de 500 mm/min sur un appareil INSTRON 5564. Les modules 10 %, 100 %, 300 %, et la résistance à la rupture sont exprimés en MPa ; l'allongement à la rupture est exprimé en %. II est possible de déterminer un indice de renforcement à partir du rapport entre les modules à 300 % et le module à 100% de déformation.

La mesure de dureté Shore A des vulcanisats est réalisée selon les indications de la norme ASTM D 2240. La valeur donnée est mesurée à 15 secondes.

La mesure de perte de masse par abrasion est réalisée selon les indications de la norme DIN 53516 qui utilise un abrasimètre Zwick où l'éprouvette cylindrique est soumise à l'action d'une toile abrasive de grains P60 et fixée sur la surface d'un tambour tournant sous une pression de contact de 10N et pour une course de 40 mètres.

La valeur mesurée est un volume de perte de substance (en mm³) après usure par abrasion; plus elle est faible et meilleure est la résistance à l'abrasion.

Les propriétés mesurées sont rassemblés dans le tableau 4.

**Tableau 4**

| Référence | Témoin 1 | Témoin 2 | Exemple 2 |
|---|---|---|---|
| Module 10 (Mpa) | 0,76 | 0,89 | 0,86 |
| Module 100 (Mpa) | 1,46 | 3,14 | 3,37 |
| Module 200 (Mpa) | 2,92 | 7,65 | 10,01 |
| Module 300 (Mpa) | 5,58 | 13,12 | 18,27 |
| Résistance rupture (Mpa) | 20 | 28,7 | 26,5 |
| Allongement à la rupture (%) | 657 | 567 | 410 |
| I.R. = 200/100 | 2,00 | 2,44 | 2,97 |
| I.R. = 300/100 | 3,82 | 4,18 | 5,42 |
| Dureté Shore A-15s (pts) | 51 | 63 | 61 |
| Perte par abrasion 10N (mm³) | 221 | 76 | 63 |

### 5) Propriétés dynamiques des vulcanisats :

Les propriétés mécaniques sont mesurées sur un viscoanalyseur (Metravib VA3000), selon la norme ASTM D5992.

Les valeurs de facteur de perte (tan δ) et de module complexe en compression dynamique (E*) sont enregistrées sur des échantillons vulcanisés (éprouvette cylindrique de section 95 mm² et de hauteur 14 mm). L'échantillon est soumis au départ à une prédéformation de 10% puis à une déformation sinusoïdale en compression alternée de plus ou moins 2%. Les mesures sont réalisées à 60°C et à une fréquence de 10 Hz.

Les résultats, présentés dans le tableau IV, sont le module complexe en compression (E* - 60°C - 10 Hz) et le facteur de perte (tan δ - 60°C - 10 Hz).

Les valeurs du facteur de perte (tan δ) et d'amplitude de module élastique en cisaillement dynamique (ΔG') sont enregistrées sur des échantillons vulcanisés (éprouvette parallélépipédique de section 8 mm² et de hauteur 7 mm). L'échantillon est soumis à une déformation sinusoïdale en double cisaillement alternée à une température de 40°C et à une fréquence de 10 Hz. Les processus de balayage en amplitude de déformations s'effectue selon un cycle aller-retour, allant de 0,1% à 50% puis retour de 50% à 0,1%.

Les résultats présentés dans le tableau 5, sont issus du balayage en amplitude de déformations au retour et concernent la valeur maximale du facteur de perte (tan δ max retour - 40°C - 10 Hz) ainsi que l'amplitude du module élastique (ΔG' - 40°C - 10 Hz) entre les valeurs à 0,1 % et 50% de déformation (effet Payne).

**Tableau 5**

| Référence | Témoin 1 | Témoin 2 | Exemple 2 |
|---|---|---|---|
| E* - 60°C - 10 Hz (MPa) | 8,10 | 8,28 | 7,39 |
| Tang δ - 60°C -10 Hz | 0,170 | 0,095 | 0,076 |
| Tang δ max retour - 40°C - 10 Hz | 0,192 | 0,143 | 0,120 |
| ΔG' - 40°C - 10 Hz (MPa) | 2,25 | 2,33 | 1,72 |

L'examen des différents résultats du tableau 3 montre tout d'abord, pour la composition conforme à l'invention (exemple 2), comparée à la composition témoin 2, une cinétique de vulcanisation nettement plus rapide, illustrée par une valeur de Vret max qui est nettement supérieure (multipliée par 1,8)

Après cuisson, la composition conforme à l'invention présente (tableau 4) des propriétés à la rupture sensiblement équivalentes, mais les valeurs les plus élevées des modules sous forte déformation (MA100 et MA300) et de rapport MA300/MA100, indicateurs clairs pour l'homme du métier d'un meilleur renforcement apporté par la charge inorganique et l'agent de couplage selon l'invention.

Enfin et surtout, la composition de l'invention révèle une hystérèse nettement améliorée, comme démontré par des valeurs de Tang δ - 60°C et de E* - 60°C sensiblement diminuées (tableau 5).

## Revendications

1. Utilisation :
→ d'une quantité efficace d'un agent de couplage (A) (charge inorganique - élastomère) comprenant un composé organosilicique fonctionnalisé porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
◆ (B) au moins un élastomère de type caoutchouc, naturel ou synthétique ;
◆ (C) une charge inorganique à titre de charge renforçante ;
◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (ou des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification (D7), et des mélanges de ces espèces ;
→ ladite utilisation étant **caractérisée en ce que** :
+ l'agent de couplage (A) est choisi parmi le groupe des agents de couplage dont chaque membre est un composé constitué essentiellement d'un composé organosilicique fonctionnalisé consistant dans les espèces (i) et (2i) suivantes :
(i) étant au moins un oligomère siloxane fonctionnalisé correspondant à la formule (I) suivante :
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
dans laquelle :
- a représente un nombre entier choisi parmi 0, 1 et 2 ;
- a' représente un nombre entier choisi parmi 0, 1 et 2 ;
- la somme a + a' se situe dans l'intervalle allant de 0 à 2 avec la condition selon laquelle quand a = 0, alors au moins un des symboles G⁰ répond à la définition donnée ci-après pour G² ;
- soit au moins un des m, n, o, p est un nombre entier ou fractionnaire différent de 0 (zéro) et q représente un nombre entier ou fractionnaire égal ou supérieur à 1, soit q est supérieur à 1 et chacun des m, n, o, p a une valeur quelconque ;
- les symboles G⁰, identiques ou différents, représentent chacun l'un des groupes correspondant à G² ou G¹ ;
- les symboles G², identiques ou différents, représentent chacun : un groupe hydroxyle ou un groupe monovalent hydrolysable ;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ; avec la possibilité complémentaire selon laquelle, le cas échéant, un groupe G¹ peut former avec un groupe G² et l'atome de silicium auxquel G¹ et G² sont liés, un groupe carbocyclique monocyclique ou polycyclique ayant de 2 à 10 atomes de carbone cyclique et pouvant comporter un ou plusieurs hétéroatome(s) cyclique(s) oxygéné(s)
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
+ un groupe hydrocarboné aliphatique, saturé ou insaturé ; un groupe carbocyclique, saturé ou insaturé et/ou aromatique, monocyclique ou polycylique ; ou un groupe représentant une partie hydrocarbonée aliphatique, saturée ou insaturée et une partie carbocyclique telle que définie ci-dessus ;
+ un groupe -X-G³ où : X représente -O-, -S- ou -NG⁴- avec G⁴ prenant l'une quelconque des significations données ci-avant pour G¹ ; G³, identique ou différent de G⁴, représente l'un quelconques des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
+ ou, lorsque q = 1, un groupe -[-Z-SiO_{(3-a-a')/2}(G²)ₐ(G²)_{a'}] ((G⁰)₃SiO_{1/2}]ₘ [(G⁰)₂SiO_{2/0}]ₙ [G⁰SiO_{3/2}]ₒ [SiO_{4/2}]ₚ dans lequel les symboles Z, G¹, G², G⁰, a, a', m, n, o et p possèdent les définitions indiquées ci-avant ;
(2i) étant un mélange d'au moins un siloxane fonctionnalisé (i) avec (3i) au moins un organosilane fonctionnalisé correspondant à la formule (I) dans laquelle m = n = o = p = 0 (zéro), q = 1, a devient un nombre entier choisi parmi 0, 1, 2 et 3 et la somme a + a' = 3 ;
+ ledit agent de couplage (A) est incorporé dans des compositions de caoutchouc à base d'élastomères isopréniques.

2. Utilisation selon la revendication 1, **caractérisée en ce que** les ingrédients (A) sont choisis parmi le groupe des agents de couplage dont chaque membre est un composé organosilicique constitué essentiellement d'un composé :
➢ consistant dans :
■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
■ les symboles G⁰, identiques ou différents, représentent chacun l'un des radicaux choisis ci-après pour G¹ ou G² ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical hydroxyle, un radical alkoxy, linéaire ou ramifié, en C₁-C₈, éventuellement substitué par un ou plusieurs (C₁-C₈)alkoxy ;
■ Z représente le radical divalent -Z'-Z"- où :
- Z' représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
- Z" représente : un lien valenciel, -O- ou -NR⁴-, avec R⁴ étant : un atome d'hydrogène ; un radical alkyle, linéaire ou ramifié, en C₁-C₈ ; un radical cycloalkyle en C₅-C₁₀ ; un radical aryle en C₆-C₁₈ ; ou un radical (C₆-C₁₈)aryl-(C₁-C₈)alkyle ;
■ A désigne un groupe -O-G³ ou -NG⁴G³ où G³ et G⁴, identiques ou différents entre eux, représentent chacun : un radical alkyle, linéaire ou ramifié, en C₁-C₈ ; un radical cycloalkyle en C₅-C₁₀ ou un radical aryle en C₆-C₁₈.

3. Utilisation selon l'une des revendications 1 et 2, **caractérisée en ce que** les ingrédients (A) sont choisis parmi le groupe des agents de couplage dont chaque membre est un composé organosilicique constitué essentiellement d'un composé :
➢ consistant dans :
■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
■ les symboles G⁰, identiques ou différents, représentent chacun l'un des radicaux choisis ci-après pour G¹ ou G² ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
■ Z représente le radical divalent -Z'-Z"- où :
- Z' représente : une chaîne alkylène en C₁-C₈ ;
- Z" représente : un lien valenciel, -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

4. Utilisation selon l'une des revendications 1 à 3, **caractérisée en ce que** les ingrédients (A) sont choisis parmi le groupe des agents de couplage dont chaque membre est un composé organosilicique constitué essentiellement d'un composé :
➢ consistant dans :
■ (i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (2i) des mélanges d'espèce(s) (i) avec (3i) un (ou des) organosilane(s) fonctionnalisé(s) correspondant à la formule (I) dans laquelle : a + a' = 3 ; m = n = o = p = 0 (zéro) ; et q = 1 ;
➢ et dans les structures desquels :
■ les symboles G⁰, identiques ou différents, représentent chacun l'un des radicaux choisis ci-après pour G¹ ou G² ;
■ a représente un nombre entier égal à 3 ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux hydroxyle, méthoxy, éthoxy, n-propoxy, isopropoxy et n-butoxy ;
■ Z représente le radical divalent -Z'-Z"- où :
- Z' est choisi dans le groupe formé par les radicaux divalents méthylène, éthylène et propylène ;
- Z" représente : un lien valenciel, -O- ou -NR⁴-, avec R⁴ étant un atome d'hydrogène ;
■ A désigne un groupe -O-G³ où G³ est choisi dans le groupe formé par les radicaux méthyle, éthyle, propyle, isopropyle, cyclohexyle et phényle.

5. Compositions d'élastomère(s) **caractérisées en ce qu'**elles comprennent :
(B) au moins un élastomère isoprénique,
(C) une charge inorganique renforçante, et
(A) une quantité adéquate de l'agent de couplage consistant dans l'ingrédient (A) défini dans l'une des revendications 1 à 4.

6. Compositions selon la revendication 5, **caractérisées en ce qu'**elles comprennent (les parties étant données en poids) :
● pour 100 parties d'élastomère(s) isoprénique(s),
● de 10 à 200 parties de charge inorganique (C), et
● une quantité de système de couplage qui apporte dans chaque composition 0,5 à 15 parties d'ingrédient (A).

7. Compositions selon la revendication 6, **caractérisées en ce qu'**elles comprennent (les parties étant données en poids) :
● pour 100 parties d'élastomère(s) isoprénique(s),
● de 30 à 150 parties de charge inorganique (C),
● une quantité de système de couplage qui apporte dans chaque composition 1 à 10 parties d'ingrédient (A).

8. Compositions selon l'une des revendications 5 à 7, **caractérisées en ce que** le (ou les) élastomère(s) isopréniques(s) est (sont) choisi(s) parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
- (2.1) les monomères diènes conjuguées, autres que l'isoprène, ayant de 4 à 22 atomes de carbone ;
- (2.2) les monomères vinyles aromatiques ayant de 8 à 20 atomes de carbone ;
- (2.3) les monomères nitriles vinyliques ayant de 3 à 12 atomes de carbone ;
- (2.4) les monomères esters acryliques dérivés de l'acide acrylique ou de l'acide méthacrylique avec des alcanols ayant de 1 à 12 atomes de carbone ;
- (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire allant de 51 % à 99,5 % en poids d'élastomère précité (1) ou (3) et une quantité minoritaire allant de 49 % à 0,5 % en poids) d'un ou plusieurs élastomères diéniques autres qu'isopréniques.

9. Compositions selon la revendication 8, **caractérisées en ce que** l'on fait appel à un plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutcouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile) et un terpolymère (éthylène-propylène-diène monomère non conjugué).

10. Compositions selon l'une des revendications 5 à 9, **caractérisées en ce que** la charge inorganique renforçante consiste dans de la silice, prise seule ou en mélange avec de l'alumine.

11. Compositions selon la revendication 10, **caractérisées en ce que** :
■ la silice est une silice précipitée, par exemple présentant une surface spécifique BET inférieure ou égale à 450 m²/g ,
■ l'alumine est une alumine hautement dispersible, par exemple présentant une surface spécifique BET de 30 à 400 m²/g et un taux élevé de fonctions réactives de surface Al-OH.

12. Compositions selon l'une des revendications 5 à 11, **caractérisées en ce qu'**elles contiennent en outre tout ou partie d'autres constituants ou additifs auxiliaires comprenant :
■ s'agissant du système de vulcanisation :
- (D1) : à titre obligatoire, des agents de vulcanisation choisis parmi le soufre ou des composés donneurs de soufre ;
- (D2) : à titre facultatif, des accélérateurs de vulcanisation ;
- (D3) : à titre facultatif, des activateurs de vulcanisation ;
■ s'agissant d'autre(s) additif(s) :
- (D4) : à titre facultatif, une charge renforçante conventionnelle consistant dans le noir de carbone ;
- (D5) : à titre facultatif, une charge blanche conventionnelle peu ou non renforçante ;
- (D6) : à titre facultatif, des agents protecteurs ;
- (D7) : à titre facultatif, des agents de plastification.

13. Procédé de préparation des compositions d'élastomère(s) isoprénique(s) selon l'une des revendications 5 à 12, **caractérisé en ce qu'**il consiste à mettre en oeuvre les deux phases 1 et 2 suivantes :
● phase 1 : on introduit et malaxe dans un mélangeur interne, en une ou plusieurs étapes, tous les ingrédients nécessaires, à l'exception généralement du (ou des) agent(s) de vulcanisation en opérant à une température de 40 à 200°C ;
● phase 2 : puis le mélange ainsi obtenu est repris sur un mélangeur externe et on y ajoute alors le (ou les) agent(s) de vulcanisation et éventuellement un ou plusieurs autre(s) ingrédient(s), en opérant à une température plus basse, inférieure à 120°C.

14. Procédé selon la revendication 13, **caractérisé en ce que** l'agent de couplage (A) est fractionné entre les deux phases 1 et 2, la première fraction incorporée en phase 1 correspondant à une proportion de 10 à 80% en poids, la seconde fraction incorporée en phase 2 correspondant à une proportion de 90 à 20% en poids.

15. Articles en élastomère(s), **caractérisés en ce qu'**ils possèdent un corps comprenant une composition selon l'une des revendications 5 à 12.

16. Articles selon la revendication 15, **caractérisés en ce qu'**ils consistent dans des supports de moteurs, des semelles de chaussures, des galets de téléphérique, des joints d'appareillages électroménagers et des gaines de câbles.

## Patentansprüche

1. Verwendung:
→ einer wirksamen Menge eines Kupplungsmittels (A) (für anorganischen Füllstoff - Elastomer), umfassend eine funktionalisierte Organosiliciumverbindung mit mindestens zwei Funktionen "X" oder "Y", die einerseits mittels der Funktion "X" auf das Elastomer und andererseits mittels der Funktion "Y" auf den anorganischen Füllstoff aufgepfropft werden kann;
→ als Kupplungsmittel für anorganischen Füllstoff - Elastomer in Kautschukzusammensetzungen, umfassend:
◆ (B) mindestens ein Elastomer vom Typ Natur-oder Synthesekautschuk;
◆ (C) einen anorganischen Füllstoff als verstärkenden Füllstoff;
◆ (D) ganz oder teilweise andere Bestandteile oder Additive, die aus einem oder mehreren Vulkanisationsmitteln (D1), gegebenenfalls einem oder mehreren Vulkanisationsbeschleunigern (D2), gegebenenfalls einem oder mehreren Vulkanisationsaktivatoren (D3), gegebenenfalls einem oder mehreren nichtweißen verstärkenden Füllstoffen (D4), gegebenenfalls einem oder mehreren wenig oder nicht verstärkenden anorganischen Füllstoffen (D5), gegebenenfalls einem oder mehreren Schutzmitteln (D6), gegebenenfalls einem oder mehreren Weichmachern (D7) und Mischungen dieser Spezies ausgewählt sind;
→ wobei die Verwendung **dadurch gekennzeichnet ist, dass**:
+ das Kupplungsmittel (A) aus der Gruppe der Kupplungsmittel ausgewählt ist, in der jedes Mitglied eine Verbindung ist, die im Wesentlichen aus einer funktionalisierten Organosiliciumverbindung besteht, die aus den folgenden Spezies (i) und (2i) besteht:
(i) mindestens einem funktionalisierten Siloxanoligomer der folgenden Formel (I):
[(G⁰)₃SiO_{1/2}]ₘ[(G⁰)₂SiO_{2/2}]ₙ[G₀SiO_{3/2}]ₒ[SiO_{4/2}]ₚ[(G²)ₐ(G¹)_{a'}(Z-CO-N=N-CO-A)SiO_{(3-a-a')/2}]_{q} (I)
worin:
- a für eine ganze Zahl steht, die aus 0, 1 und 2 ausgewählt ist;
- a' für eine ganze Zahl steht, die aus 0, 1 und 2 ausgewählt ist;
- die Summe von a + a' im Bereich von 0 bis 2 liegt, mit der Maßgabe, dass im Fall von a = 0 mindestens eines der Symbole G⁰ der nachstehend für G² angegebenen Definition entspricht;
- entweder mindestens eine der Variablen m, n, o und p für eine ganze oder gebrochene Zahl, die von 0 (null) verschieden ist, steht und q für eine ganze oder gebrochene Zahl größer gleich 1 steht oder q größer 1 ist und jede der Variablen m, n, o und p einen beliebigen Wert hat;
- die Symbole G⁰ gleich oder verschieden sind und jeweils für G² oder G¹ entsprechende Gruppen stehen;
- die Symbole G² gleich oder verschieden sind und jeweils für eine Hydroxylgruppe oder eine hydrolysierbare einwertige Gruppe stehen;
- die Symbole G¹ gleich oder verschieden sind und jeweils für eine·gesättigte oder ungesättigte aliphatische Kohlenwasserstoffgruppe; eine monocyclische oder polycyclische, gesättigte oder ungesättigte und/oder aromatische carbocyclische Gruppe; oder eine Gruppe mit einem gesättigten oder ungesättigten aliphatischen Kohlenwasserstoffteil und einem carbocyclischen Teil gemäß obiger Definition stehen; wobei zusätzlich die Möglichkeit besteht, dass gegebenenfalls eine Gruppe G¹ mit einer Gruppe G² und dem Siliciumatom, an das G¹ und G² gebunden sind, eine monocyclische oder polycyclische carbocyclische Gruppe bilden, die 2 bis 10 Ringkohlenstoffatome aufweist und ein oder mehrere Sauerstoff-Ringheteroatome enthalten kann;
- das Symbol Z für einen zweiwertigen Rest steht, der aus einer gesättigten oder ungesättigten aliphatischen Kohlenwasserstoffgruppe; einer monocyclischen oder polycyclischen, gesättigten, ungesättigten und/oder aromatischen carbocyclischen Gruppe; und einer Gruppe mit einem gesättigten oder ungesättigten aliphatischen Kohlenwasserstoffteil und einem carbocyclischen Teil gemäß obiger Definition ausgewählt ist; wobei der zweiwertige Rest gegebenenfalls substituiert oder durch ein Sauerstoffatom und/oder ein Schwefelatom und/oder ein Stickstoffatom unterbrochen ist, wobei das Stickstoffatom 1 einwertige Gruppe trägt, die aus einem Wasserstoffatom; einem gesättigten oder ungesättigten aliphatischen Kohlenwasserstoffatom; einer monocyclischen oder polycyclischen, gesättigten, ungesättigten und/oder aromatischen carbocyclischen Gruppe; und einer Gruppe mit einem gesättigten oder
ungesättigten aliphatischen Kohlenwasserstoffteil und einem carbocyclischen Teil gemäß obiger Definition ausgewählt ist;
- das Symbol A für:
+ eine gesättigte oder ungesättigte aliphatische Kohlenwasserstoffgruppe; eine monocyclische oder polycyclische, gesättigte oder ungesättigte und/oder aromatische carbocyclische Gruppe; oder eine Gruppe mit einem gesättigten oder ungesättigten aliphatischen Kohlenwasserstoffteil und einem carbocyclischen Teil gemäß obiger Definition;
+ eine Gruppe -X-G³, worin X für -O-, -S-oder -NG⁴-, wobei G⁴ eine der vorstehend für G¹ angegebenen Bedeutungen annimmt, steht; G³ mit G⁴ identisch oder davon verschieden ist und für eine beliebige der für G¹ definierten Gruppen steht; wobei die Substituenten G³ und G⁴ der Gruppe -NG⁴G³ außerdem zusammen und mit dem Stickstoffatom, an das sie gebunden sind, einen einzigen 5- bis 7-gliedrigen Ring bilden können, wobei in dem Ring 3 bis 6 Kohlenstoffatome, 1 oder 2 Stickstoffatome und gegebenenfalls 1 oder 2 ungesättigte Doppelbindungen enthalten sind;
+ oder dann, wenn q = 1, eine Gruppe -[-Z-SiO_{(3-a-a')/2}(G²)ₐ(G¹)_{a'}][(G⁰)₃SiO_{1/2}]ₘ [(G⁰)₂SiO_{2/2}]ₙ [G⁰SiO_{3/2}]₀ [SiO_{4/2}]ₚ, worin die Symbole Z, G¹, G², G⁰, a, a' , m, n, o und p die vorstehend angegebenen Definitionen besitzen;
steht;
(2i) einer Mischung von mindestens einem funktionalisierten Siloxanoligomer (i) mit (3i) mindestens einem funktionalisierten Organosilan, das der Formel (I) entspricht, worin m = n = o = p = 0 (null), q = 1, a eine ganze Zahl wird, die aus 0, 1, 2 und 3 ausgewählt ist, und die Summe a + a' = 3;
+ das Kupplungsmittel (A) in die Kautschukzusammensetzungen auf Basis von Isoprenelastomeren eingearbeitet wird.

2. Verwendung nach Anspruch 1, **dadurch gekennzeichnet, dass** die Bestandteile (A) aus der Gruppe der Kupplungsmittel ausgewählt sind, in der jedes Mitglied eine Organosiliciumverbindung ist, die im Wesentlichen aus einer Verbindung besteht, die:
➢ aus:
■ (i) funktionalisierten Siloxanoligomeren, die der Formel (I) entsprechen, worin a + a' = 1 oder 2; m im Bereich von 1 bis 2 liegt; n = p = o = 0 (null) und q = 1;
■ (2i) Mischungen von Spezies (i) mit (3i) einem oder mehreren funktionalisierten Organosilanen, die der Formel (I) entsprechen, worin a + a' = 3; m = n = o = p = 0 (null) und q = 1;
➢ und den Strukturen, für die:
■ die Symbole G⁰ gleich oder verschieden sind und jeweils für einen der nachstehend für G¹ oder G² ausgewählten Reste stehen;
■ die Symbole G¹ gleich oder verschieden sind und jeweils für einen linearen oder verzweigten C₁-C₈-Alkylrest; einen C₅-C₁₀-Cycloalkylrest oder einen C₆-C₁₈-Arylrest stehen;
■ die Symbole G² gleich oder verschieden sind und jeweils für einen Hydroxylrest oder einen linearen oder verzweigten C₁-C₈-Alkoxyrest, der gegebenenfalls durch ein oder mehrere (C₁-C₈)-Alkoxy substituiert ist, stehen;
■ Z für den zweiwertigen Rest -Z'-Z'' steht, wobei:
- Z' für eine C₁-C₈-Alkylenkette; eine gesättigte C₅-C₁₀-Cycloalkylengruppe; eine C₆-C₁₈-Arylengruppe oder eine zweiwertige Gruppe, die aus einer Kombination von mindestens zwei dieser Reste besteht, steht;
- Z'' für eine Valenzbindung, -O- oder -NR⁴-steht, wobei R⁴ für ein Wasserstoffatom; einen linearen oder verzweigten C₁-C₈-Alkylrest; einen C₅-C₁₀-Cycloalkylrest; einen C₆-C₁₈-Arylrest oder einen (C₆-C₁₈)-Aryl-(C₁-C₈)-alkylrest steht;
■ A für eine Gruppe -O-G³ oder -NG⁴G³ steht, wobei G³ und G⁴ gleich oder voneinander verschieden sind und jeweils für einen linearen oder verzweigten C₁-C₈-Alkylrest; einen C₅-C₁₀-Cycloalkylrest oder einen C₆-C₁₈-Arylrest stehen;
besteht.

3. Verwendung nach einem der Ansprüche 1 und 2, **dadurch gekennzeichnet, dass** die Bestandteile (A) aus der Gruppe der Kupplungsmittel ausgewählt sind, in der jedes Mitglied eine Organosiliciumverbindung ist, die im Wesentlichen aus einer Verbindung besteht, die:
➢ aus:
■ (i) funktionalisierten Siloxanoligomeren, die der Formel (I) entsprechen, worin a + a' = 1 oder 2; m im Bereich von 1 bis 2 liegt; n = p = o = 0 (null) und q = 1;
■ (2i) Mischungen von Spezies (i) mit (3i) einem oder mehreren funktionalisierten Organosilanen, die der Formel (I) entsprechen, worin a + a' = 3; m = n = o = p = 0 (null) und q = 1;
➢ und den Strukturen, für die:
■ die Symbole G⁰ gleich oder verschieden sind und jeweils für einen der nachstehend für G¹ oder G² ausgewählten Reste stehen;
■ die Symbole G¹ gleich oder verschieden sind und aus der Gruppe bestehend aus Methyl-, Ethyl-, Propyl-, Isopropyl-, Cyclohexyl- und Phenylresten ausgewählt sind;
■ die Symbole G² gleich oder verschieden sind und aus der Gruppe bestehend aus Hydroxyl-, Methoxy-, Ethoxy-, n-Propoxy-, Isopropoxy-, n-Butoxy-, Methoxymethoxy-, Ethoxyethoxy- und Methoxyethoxyresten ausgewählt sind;
■ Z für den zweiwertigen Rest -Z'-Z'' steht, wobei:
- Z' für eine C₁-C₈-Alkylenkette steht;
- Z'' für eine Valenzbindung, -O- oder -NR⁴-steht, wobei R⁴ aus der Gruppe bestehend aus Wasserstoff und Methyl-, Ethyl-, Propyl-, Isopropyl-, n-Butyl-, Isobutyl-, t-Butyl-, Pentyl-, Hexyl-, Cyclohexyl- und Benzylresten ausgewählt ist;
■ A für eine Gruppe -O-G³ oder -NG⁴G³ steht, wobei G³ und G⁴ gleich oder voneinander verschieden sind und aus der Gruppe bestehend aus Methyl-, Ethyl-, Propyl-, Isopropyl-, Cyclohexyl- und Phenylresten ausgewählt sind;
besteht.

4. Verwendung nach einem der Ansprüche 1 bis 3, **dadurch gekennzeichnet, dass** die Bestandteile (A) aus der Gruppe der Kupplungsmittel ausgewählt sind, in der jedes Mitglied eine Organosiliciumverbindung ist, die im Wesentlichen aus einer Verbindung besteht, die:
➢ aus:
■ (i) funktionalisierten Siloxanoligomeren, die der Formel (I) entsprechen, worin a + a' = 1 oder 2; m im Bereich von 1 bis 2 liegt; n = p = o = 0 (null) und q = 1;
■ (2i) Mischungen von Spezies (i) mit (3i) einem oder mehreren funktionalisierten Organosilanen, die der Formel (I) entsprechen, worin a + a' = 3; m = n = o = p = 0 (null) und q = 1;
➢ und den Strukturen, für die:
■ die Symbole G⁰ gleich oder verschieden sind und jeweils für einen der nachstehend für G¹ oder G² ausgewählten Reste stehen;
■ a für eine ganze Zahl mit einem Wert von 3 steht;
■ die Symbole G¹ gleich oder verschieden sind und aus der Gruppe bestehend aus Methyl-, Ethyl-, propyl-, Isopropyl-, Cyclohexyl- und Phenylresten ausgewählt sind;
■ die Symbole G² gleich oder verschieden sind und aus der Gruppe bestehend aus Hydroxyl-, Methoxy-, Ethoxy-, n-Propoxy-, Isopropoxy- und n-Butoxyresten ausgewählt sind;
■ Z für den zweiwertigen Rest -Z'-Z" steht, wobei:
- Z' aus der Gruppe bestehend aus zweiwertigen Methylen-, Ethylen- und Propylenresten ausgewählt ist;
- Z'' für eine Valenzbindung, -O- oder -NR⁴-steht, wobei R⁴ für ein Wasserstoffatom steht;
■ A für eine Gruppe -O-G³ steht, wobei G³ aus der Gruppe bestehend aus Methyl-, Ethyl-, Propyl-, Isopropyl-, Cyclohexyl- und Phenylresten ausgewählt ist;
besteht.

5. Elastomerzusammensetzungen, **dadurch gekennzeichnet, dass** sie Folgendes umfassen:
(B) mindestens ein Isoprenelastomer,
(C) einen verstärkenden anorganischen Füllstoff und
(A) eine ausreichende Menge des Kupplungsmittels, das aus dem Bestandteil (A) gemäß einem der Ansprüche 1 bis 4 besteht.

6. Zusammensetzungen nach Anspruch 5, **dadurch gekennzeichnet, dass** sie Folgendes umfassen (wobei sich die Teile auf das Gewicht beziehen):
● pro 100 Teile Isoprenelastomer(e)
● 10 bis 200 Teile anorganischen Füllstoff (C) und
● eine Menge an Kupplungssystem, die in jeder Zusammensetzung 0,5 bis 15 Teile Bestandteil (A) beibringt.

7. Zusammensetzungen nach Anspruch 6, **dadurch gekennzeichnet, dass** sie Folgendes umfassen (wobei sich die Teile auf das Gewicht beziehen):
● pro 100 Teile Isoprenelastomer(e)
● 30 bis 150 Teile anorganischen Füllstoff (C) und
● eine Menge an Kupplungssystem, die in jeder Zusammensetzung 1 bis 10 Teile Bestandteil (A) beibringt.

8. Zusammensetzungen nach einem der Ansprüche 5 bis 7, **dadurch gekennzeichnet, dass** das Isoprenelastomer bzw. die Isoprenelastomere aus
(1) synthetischen Polyisoprenen, erhalten durch Homopolymerisation von Isopren oder 2-Methyl-1,3-butadien;
(2) synthetischen Polyisoprenen, erhalten durch Copolymerisation von Isopren mit einem oder mehreren ethylenisch ungesättigten Monomeren, die aus:
- (2.1) konjugierten Dienmonomeren, die von Isopren verschieden sind und 4 bis 22 Kohlenstoffatome aufweisen;
- (2.2) vinylaromatischen Monomeren mit 8 bis 20 Kohlenstoffatomen;
- (2.3) Vinylnitrilmonomeren mit 3 bis 12 Kohlenstoffatomen;
- (2.4) Acrylestermonomeren, die sich von Acrylsäure oder Methacrylsäure mit Alkanolen mit 1 bis 12 Kohlenstoffatomen ableiten;
- (2.5) einer Mischung von mehreren der oben aufgeführten Monomere (2.1) bis (2.4) miteinander ausgewählt sind; wobei die Polyisoprencopolymere zwischen 99 und 20 Gew.-% Isopreneinheiten und zwischen 1 und 80 Gew.-% Dien-, Vinylaromat-, Vinylnitril- und/oder Acrylestereinheiten enthalten und beispielsweise aus Poly(isopren-butadien), Poly(isopren-styrol) und Poly(isopren-butadien-styrol) bestehen;
(3) Naturkautschuk;
(4) Copolymeren, erhalten durch Copolymerisation von Isobuten und Isopren (Butylkautschuk), sowie halogenierten Versionen, insbesondere chlorierten oder bromierten Versionen, dieser Copolymere;
(5) einer Mischung von mehreren der oben aufgeführten Elastomere (1) bis (4) miteinander;
(6) einer Mischung, die eine größere Menge im Bereich von 51 bis 99,5 Ges.-% an oben aufgeführtem Elastomer (1) oder (3) und eine kleinere Menge im Bereich von 49 bis 0,5 Gew.-% eines oder mehrerer Dienelastomere, die von Isoprenelastomeren verschieden sind, enthält;
ausgewählt ist bzw. sind.

9. Zusammensetzungen nach Anspruch 8, **dadurch gekennzeichnet, dass** ein oder mehrere Isoprenelastomere, die aus (1) synthetischen Polyisopren-Homopolymeren; (2) synthetischen Polyisopren-Copolymeren, bestehend aus Poly(isopren-butadien), Poly-(isopren-styrol) und Poly(isopren-butadien-styrol); (3) Naturkautschuk; (4) Butylkautschuk; (5) einer Mischung von mehreren der oben aufgeführten Elastomere (1) bis (4) miteinander; (6) einer Mischung, die eine größere Menge an oben aufgeführtem Elastomer (1) oder (3) und eine kleinere Menge eines Dienelastomer, das von Isoprenelastomeren verschieden ist und aus Polybutadien, Polychloropren, Poly(butadien-styrol), Poly(butadien-acrylnitril) und einem Terpolymer von Ethylen, Propylen und einem nicht konjugierten Dienmonomer besteht, enthält, ausgewählt sind, verwendet werden.

10. Zusammensetzungen nach einem der Ansprüche 5 bis 9, **dadurch gekennzeichnet, dass** der verstärkende anorganische Füllstoff aus Kieselsäure für sich alleine oder im Gemisch mit Aluminiumoxid besteht.

11. Zusammensetzungen nach Anspruch 10, **dadurch gekennzeichnet, dass**:
■ es sich bei der Kieselsäure um Fällungskieselsäure handelt, beispielsweise mit einer spezifischen BET-Oberfläche kleiner gleich 450 m²/g;
■ es sich bei dem Aluiminiumoxid um ein hochdispersibles Aluminiumoxid handelt, beispielsweise mit einer spezifischen BET-Oberfläche von 30 bis 400 m²/g und einem hohen Gehalt an reaktiven Al-OH-Oberflächenfunktionen.

12. Zusammensetzung nach einem der Ansprüche 5 bis 11, **dadurch gekennzeichnet, dass** sie außerdem ganz oder teilweise andere Hilfsbestandteile oder -additive enthalten, die Folgendes umfassen:
■ hinsichtlich des Vulkanisationssystems:
- D(1): zwingend Vulkanisationsmittel, die aus Schwefel oder Schwefeldonatorverbindungen ausgewählt sind;
- (D2): gegebenenfalls Vulkanisationsbeschleuniger,
- (D3): gegebenenfalls Vulkanisationsaktivatoren,
■ hinsichtlich anderer Additive:
- (D4): gegebenenfalls einen herkömmlichen verstärkenden Füllstoff, der aus Ruß besteht;
- (D5): gegebenenfalls einen wenig oder nicht verstärkenden herkömmlichen weißen Füllstoff;
- (D6): gegebenenfalls Schutzmittel;
- (D7): gegebenenfalls Weichmacher.

13. Verfahren zur Herstellung von Isoprenelastomerzusammensetzungen nach einem der Ansprüche 5 bis 12, **dadurch gekennzeichnet, dass** man die folgenden beiden Phasen 1 und 2 durchführt:
● Phase 1: alle notwendigen Bestandteile, im Allgemeinen mit Ausnahme des Vulkanisationsmittels bzw. der Vulkanisationsmittel werden in einem oder mehreren Schritten in einen Innenmischer eingetragen und gemischt, wobei bei einer Temperatur von 40 bis 200°C gearbeitet wird;
● Phase 2: dann wird die so erhaltene Mischung in einem Außenmischer aufgenommen und dann mit dem Vulkanisationsmittel bzw. den Vulkanisationsmitteln und gegebenenfalls einem oder mehreren anderen Bestandteilen versetzt, wobei bei einer Temperatur von weniger als 120°C gearbeitet wird.

14. Verfahren nach Anspruch 13, **dadurch gekennzeichnet, dass** das Kupplungsmittel (A) zwischen den beiden Phasen 1 und 2 aufgeteilt wird, wobei die in Phase 1 eingearbeitete erste Fraktion einem Anteil von 10 bis 80 Gew.-% entspricht und die in Phase 2 eingearbeitete zweite Fraktion einem Anteil von 90 bis 20 Gew.-% entspricht.

15. Elastomerartikel, **dadurch gekennzeichnet, dass** sie einen Körper aufweisen, der eine Zusammensetzung nach einem der Ansprüche 5 bis 12 umfasst.

16. Artikel nach Anspruch 15, **dadurch gekennzeichnet, dass** sie aus Motorträgern, Schuhsohlen, Seilbahnrollen, Dichtungen für Elektrohaushaltsgeräte und Kabelmänteln bestehen.

## Claims

1. Use:
→ of an effective amount of a coupling agent (A) (inorganic filler - elastomer) comprising a functionalized organosilicon compound having at least two functions noted "X" or "Y", which may be grafted on the one hand onto the elastomer by means of the function "X", and on the other hand onto the inorganic filler by means of the function "Y";
→ as inorganic filler - elastomer coupling agent in rubber compositions comprising:
◆ (B) at least one elastomer of natural or synthetic rubber type;
◆ (C) an inorganic filler as reinforcing filler;
◆ (D) all or part of the other constituents or additives chosen from: one (or more) curing agent(s) (D1), optionally one (or more) curing accelerator(s) (D2), optionally one (or more) curing activator(s) (D3), optionally one (or more) non-white reinforcing filler(s) (D4), optionally one (or more) non-reinforcing or sparingly reinforcing inorganic filler(s) (D5), optionally one (or more) protecting agent(s) (D6), optionally one (or more) plasticizer(s) (D7), and mixtures of these species;
→ said use being **characterized in that**:
+ the coupling agent (A) is chosen from the group of coupling agents in which each member is a compound constituted essentially of a functionalized organosilicon compound consisting of the following species (i) and (2i):
(i) being at least one functionalized siloxane oligomer corresponding to the following formula (I):
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]ₐ (I)
in which:
- a represents an integer chosen from 0, 1 and 2;
- a' represents an integer chosen from 0, 1 and 2;
- the sum a + a' is in the range from 0 to 2, with the condition according to which when a = 0, then at least one of the symbols G⁰ corresponds to the definition given below for G²;
- either at least one of the m, n, o and p is an integer or fraction other than 0 (zero) and q represents an integer or fraction greater than or equal to 1, or q is greater than 1 and each of the m, n, o and p has any value;
- the symbols G°, which may be identical or different, each represent one of the groups corresponding to G² or G¹;
- the symbols G², which may be identical or different, each represent: a hydroxyl group or a hydrolyzable monovalent group;
- the symbols G¹, which may be identical or different, each represent: a saturated or unsaturated aliphatic hydrocarbon-based group; a saturated or unsaturated and/or aromatic, monocyclic or polycyclic carbocyclic group; or a group representing a saturated or unsaturated aliphatic hydrocarbon-based part and a carbocyclic part as defined above; with the additional possibility according to which, where appropriate, a group G¹ may form, with a group G² and the silicon atom to which G¹ and G² are attached, a monocyclic or polycyclic carbocyclic group containing from 2 to 10 ring carbon atoms and possibly comprising one or more ring oxygen heteroatom(s);
- the symbol Z represents a divalent radical chosen from: a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based part and a carbocyclic part as defined above; said divalent radical being optionally substituted or interrupted with an oxygen atom and/or a sulfur atom and/or a nitrogen atom, said nitrogen atom bearing one monovalent group chosen from: a hydrogen atom; a saturated or unsaturated aliphatic hydrocarbon-based atom; a saturated or unsaturated and/or aromatic, monocyclic or polycyclic carbocyclic group; and a group containing a saturated or unsaturated aliphatic hydrocarbon-based part and a carbocyclic part as defined above;
- the symbol A represents:
+ a saturated or unsaturated aliphatic hydrocarbon-based group; a saturated or unsaturated and/or aromatic, monocyclic or polycyclic carbocyclic group; or a group representing a saturated or unsaturated aliphatic hydrocarbon-based part and a carbocyclic part as defined above;
+ a group -X-G³ in which: X represents -O-, -S- or -NG⁴- with G⁴ taking any of the meanings given above for G¹; G³, which may be identical to or different from G⁴, represents any of the groups defined for G¹; the substituents G³ and G⁴ of the group -NG⁴G³ also possibly forming, together with the nitrogen atom to which they are attached, a single 5- to 7-membered ring comprising in the ring from 3 to 6 carbon atoms, 1 or 2 nitrogen atom(s) and optionally 1 or 2 unsaturated double bond(s);
+ or, when q = 1, a group -[-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [Si0_{4/2}]ₚ in which the symbols Z, G¹, G², G⁰', a, a', m, n, o and p have the definitions given above;
(2i) being a mixture of at least one functionalized siloxane (i) with (3i) at least one functionalized organosilane corresponding to the formula (I) in which m = n = o = p = 0 (zero), q = 1, a becomes an integer chosen from 0, 1, 2 and 3 and the sum a + a' = 3;
+ said coupling agent (A) is incorporated into rubber compositions based on isoprene elastomers.

2. Use according to Claim 1, **characterized in that** the ingredients (A) are chosen from the group of coupling agents for which each member is an organosilicon compound consisting essentially of a compound:
➢ consisting of:
■ (i) functionalized siloxane oligomers corresponding to formula (I) in which: a + a' = 1 or 2; m is in the range from 1 to 2; n = p = o = 0 (zero); and q = 1;
■ (2i) mixtures of species (i) with (3i) one (or more) functionalized organosilane(s) corresponding to formula (I) in which: a + a' = 3; m = n = o = p = 0 (zero); and q = 1;
➢ and of the structures for which:
■ the symbols G⁰, which may be identical or different, each represent one of the radicals chosen below for G¹ or G²;
■ the symbols G¹, which may be identical or different, each represent: a linear or branched C₁-C₈ alkyl radical; a C₅-C₁₀ cycloalkyl radical or a C₆-C₁₈ aryl radical;
■ the symbols G², which may be identical or different, each represent: a hydroxyl radical or a linear or branched C₁-C₈ alkoxy radical, optionally substituted with one or more (C₁-C₈)alkoxy radicals;
■ Z represents the divalent radical -Z'-Z"- in which:
- Z' represents: a C₁-C₈ alkylene chain; a saturated C₅-C₁₀ cycloalkylene group; a C₆-C₁₈ arylene group; or a divalent group consisting of a combination of at least two of these radicals;
- Z" represents: a valency bond, -O- or -NR⁴-, with R⁴ being: a hydrogen atom; a linear or branched C₁-C₈ alkyl radical; a C₅-C₁₀ cycloalkyl radical; a C₆-C₁₈ aryl radical; or a (C₆-C₁₈) aryl-(C₁-C₈) alkyl radical;
■ A denotes a group -O-G³ or -NG⁴G³ in which G³ and G⁴, which may be identical or different, each represent: a linear or branched C₁-C₈ alkyl radical; a C₅-C₁₀ cycloalkyl radical or a C₆-C₁₈ aryl radical.

3. Use according to either of Claims 1 and 2, **characterized in that** the ingredients (A) are chosen from the group of coupling agents for which each member is an organosilicon compound constituted essentially of a compound:
➢ consisting of :
■ (i) functionalized siloxane oligomers corresponding to formula (I) in which: a + a' = 1 or 2; m is in the range from 1 to 2; n = p = o = 0 (zero); and q = 1;
■ (2i) mixtures of species (i) with (3i) one (or more) functionalized organosilane(s) corresponding to formula (I) in which: a + a' = 3; m = n = o = p = 0 (zero); and q = 1;
➢ and of the structures for which:
■ the symbols G°, which may be identical or different, each represent one of the radicals chosen below for G¹ or G²;
■ the symbols G¹, which may be identical or different, are chosen from the group formed by methyl, ethyl, propyl, isopropyl, cyclohexyl and phenyl radicals;
■ the symbols G², which may be identical or different, are chosen from the group formed by hydroxyl, methoxy, ethoxy, n-propoxy, isopropoxy, n-butoxy, methoxymethoxy, ethoxyethoxy and methoxyethoxy radicals;
■ Z represents the divalent radical -Z'-Z"- in which:
- Z' represents: a C₁-C₈ alkylene chain;
- Z" represents: a valency bond, -O- or -NR⁴-, with R⁴ being chosen from the group formed by: hydrogen and methyl, ethyl, propyl, isopropyl, n-butyl, isobutyl, t-butyl, pentyl, hexyl, cyclohexyl and benzyl radicals;
■ A denotes a group -O-G³ or -NG⁴G³ in which G³ and G⁴, which may be identical or different, are chosen from the group formed by methyl, ethyl, propyl, isopropyl, cyclohexyl and phenyl radicals.

4. Use according to one of Claims 1 to 3, **characterized in that** the ingredients (A) are chosen from the group of coupling agents for which each member is an organosilicon compound constituted essentially of a compound:
➢ consisting of:
■ (i) functionalized siloxane oligomers corresponding to formula (I) in which: a + a' = 1 or 2; m is in the range from 1 to 2; n = p = o = 0 (zero); and q = 1;
■ (2i) mixtures of species (i) with (3i) one (or more) functionalized organosilane(s) corresponding to formula (I) in which: a + a' = 3; m = n = o = p = 0 (zero); and q = 1;
➢ and of the structures for which:
■ the symbols G°, which may be identical or different, each represent one of the radicals chosen below for G¹ or G²; a represents an integer equal to 3;
■ the symbols G¹, which may be identical or different, are chosen from the group formed by methyl, ethyl, propyl, isopropyl, cyclohexyl and phenyl radicals;
■ the symbols G², which may be identical or different, are chosen from the group formed by hydroxyl, methoxy, ethoxy, n-propoxy, isopropoxy and n-butoxy radicals;
■ Z represents the divalent radical -Z'-Z"- in which:
- Z' is chosen from the group formed by the divalent radicals methylene, ethylene and propylene;
- Z" represents: a valency bond, -O- or -NR⁴-, with R⁴ being a hydrogen atom;
■ A denotes a group -O-G³ in which G³ is chosen from the group formed by methyl, ethyl, propyl, isopropyl, cyclohexyl and phenyl radicals.

5. Elastomeric composition, **characterized in that** it comprises:
(B) at least one isoprene elastomer,
(C) a reinforcing inorganic filler, and
(A) an adequate amount of the coupling agent consisting of the ingredient (A) defined in any one of claims 1 to 4.

6. Composition according to Claim 5, **characterized in that** it comprises (the parts being given on a weight basis):
● per 100 parts of isoprene elastomer(s),
● from 10 to 200 parts of inorganic filler (C), and
● an amount of coupling system that provides in each composition 0.5 to 15 parts of ingredient (A).

7. Composition according to Claim 6, **characterized in that** it comprises (the parts being given on a weight basis):
● per 100 parts of isoprene elastomer(s),
● from 30 to 150 parts of inorganic filler (C),
● an amount of coupling system that provides in each composition 1 to 10 parts of ingredient (A).

8. Composition according to one of Claims 5 to 7, **characterized in that** the isoprene elastomer(s) is (are) chosen from:
(1) the synthetic polyisoprenes obtained by homopolymerization of isoprene or 2-methyl-1,3-butadiene;
(2) the synthetic polyisoprenes obtained by copolymerization of isoprene with one or more ethylenically unsaturated monomers chosen from:
- (2.1) conjugated diene monomers, other than isoprene, containing from 4 to 22 carbon atoms;
- (2.2) aromatic vinyl monomers containing from 8 to 20 carbon atoms;
- (2.3) vinyl nitrile monomers containing from 3 to 12 carbon atoms;
- (2.4) acrylic ester monomers derived from acrylic acid or methacrylic acid with alkanols containing from 1 to 12 carbon atoms;
- (2.5) a mixture of several of the abovementioned monomers (2.1) to (2.4); the polyisoprene copolymers containing between 99% and 20% by weight of isoprene units and between 1% and 80% by weight of diene, aromatic vinyl, vinyl nitrile and/or acrylic ester units, and consisting, for example, of poly(isoprene-butadiene), poly(isoprene-styrene) and poly(isoprene-butadiene-styrene);
(3) natural rubber;
(4) the copolymers obtained by copolymerization of isobutene and isoprene (butyl rubber), and also the halogenated versions, in particular the chlorinated or brominated versions, of these copolymers;
(5) a mixture of several of the abovementioned elastomers (1) to (4);
(6) a mixture containing a major amount ranging from 51% to 99.5% by weight of abovementioned elastomer (1) or (3) and a minor amount ranging from 49% to 0.5% by weight of one or more diene elastomers other than isoprene elastomers.

9. Composition according to Claim 8, **characterized in that** use is made of one or more isoprene elastomers chosen from: (1) synthetic polyisoprene homopolymers; (2) synthetic polyisoprene copolymers consisting of poly(isoprene-butadiene), poly(isoprene-styrene) and poly(isoprene-butadiene-styrene); (3) natural rubber; (4) butyl rubber; (5) a mixture of the abovementioned elastomers (1) to (4); (6) a mixture containing a major amount of abovementioned elastomer (1) or (3) and a minor amount of diene elastomer other than isoprene elastomer consisting of polybutadiene, polychloroprene, poly(butadiene-styrene), poly(butadiene-acrylonitrile) and a terpolymer (non-conjugated ethylene-propylene-diene monomer).

10. Composition according to one of Claims 5 to 9, **characterized in that** the reinforcing inorganic filler consists of silica, taken alone or as a mixture with alumina.

11. Composition according to Claim 10, **characterized in that**:
■ the silica is a precipitated silica, for example having a BET specific surface area of less than or equal to 450 m²/g,
■ the alumina is a highly dispersible alumina, for example having a BET specific surface area of from 30 to 400 m²/g and a high content of reactive surface Al-OH functions.

12. Composition according to one of Claims 5 to 11, **characterized in that** it also contains all or some other auxiliary additives or constituents comprising:
■ as regards the curing system:
- (D1): mandatorily, curing agents chosen from sulfur and sulfur-donating compounds;
- (D2): optionally, curing accelerators;
- (D3): optionally, curing activators;
■ as regards other additive(s):
- (D4): optionally, a conventional reinforcing filler consisting of carbon black;
- (D5): optionally, a sparingly reinforcing or non-reinforcing conventional white filler;
- (D6): optionally, protecting agents;
- (D7): optionally, plasticizers.

13. Process for preparing the isoprene elastomer composition according to one of Claims 5 to 12, **characterized in that** it consists in performing the following two phases 1 and 2:
● phase 1: all the necessary ingredients, with the exception generally of the curing agent(s), are introduced into and blended in an internal mixer, in one or more steps, working at a temperature of from 40 to 200°C;
● phase 2: the mixture thus obtained is then taken up in an external mixer and the curing agent(s) and optionally one or more other ingredient(s) is (are) then added thereto, working at a lower temperature, below 120°C.

14. Process according to Claim 13, **characterized in that** the coupling agent (A) is split between the two phases 1 and 2, the first fraction incorporated in phase 1 corresponding to a proportion of from .10o to 80% by weight, the second fraction incorporated in phase 2 corresponding to a proportion of from 90% to 20% by weight.

15. Elastomeric article, **characterized in that** it has a body comprising a composition according to one of Claims 5 to 12.

16. Article according to Claim 15, **characterized in that** it consists of engine supports, shoe soles, rollers for cable cars, seals for electrical household appliances and cable sheaths.
